# EUROPÄISCHE PATENTSCHRIFT

(11) **EP 2 511 852 B1**
(45) Veröffentlichungstag und Bekanntmachung des Hinweises auf die Patenterteilung: **13.03.2013**
(21) Anmeldenummer: 11162584.4
(22) Anmeldetag: 15.04.2011
(51) Int. Cl.: G06K 7/10, G03B 15/02

(54) **Beleuchtungsvorrichtung für einen kamerabasierten Codeleser**
Lighting device for a camera-based code reader
Dispositif d'éclairage pour un lecteur de code à barres basé sur un appareil de prise de vue

(43) Veröffentlichungstag der Anmeldung: 17.10.2012
(73) Patentinhaber: SICK AG, 79183 Waldkirch (DE)
(72) Erfinder: Nübling, Ralf Ulrich, 79211 Denzlingen (DE); Gehring, Roland, 79215 Elzach (DE); Nopper, Richard, 79261 Gutach (DE)
(74) Vertreter: Hehl, Ulrich

(56) Entgegenhaltungen:
- EP-A1- 2 136 248
- US-A1- 2005 231 948

## Beschreibung

Die Erfindung betrifft eine Beleuchtungsvorrichtung für einen kamerabasierten Codeleser und ein Verfahren zum auf einen Arbeitsabstand angepassten Ausleuchten eines Erfassungsbereiches nach dem Oberbegriff von Anspruch 1 beziehungsweise 12.

Für das Lesen optischer Codes, wie Barcodes oder Matrixcodes, werden zunehmend kamerabasierte Codeleser eingesetzt. Dabei wird ein Bild des Codes aufgenommen und anschließend die Codeinformation mit digitaler Bildverarbeitung ausgelesen. In industriellen Anwendungen ist der Codeleser dabei häufig stationär an einem Förderband montiert, auf dem codetragende Objekte an dem Codeleser vorbei gefördert werden. Bekannt sind andererseits aber auch Handgeräte, die über die zu lesenden Codes geführt werden.

Damit das Lesefeld ausreichend beleuchtet ist, verfügen viele Kameras über eine eigene Beleuchtung. Gängige LED-Beleuchtungssysteme sind meist diffus, somit nicht an Objektabstände angepasst und auch nicht auf die Kamera abstimmbar. Dabei wird oft nur die direkte Abstrahlcharakteristik der LEDs ausgenutzt, in anderen Fällen eine Linse zur Lichtbündelung und Effizienterhöhung verwendet. Derartige bekannte LED-Beleuchtungen haben im Nahbereich hohe Bestrahlungsintensitäten, die dann bei größeren Abständen rasch abnehmen. Zudem ist auch die Lichtverteilung innerhalb des Beleuchtungsfeldes inhomogen und zeigt einen starken Randabfall.

Aus der EP 2 136 248 A1 ist eine Bildaufnahmevorrichtung mit einer anpassbaren Beleuchtung aus mehreren Lichtquellen bekannt. In einer Ausführungsform sind drei Strahlformungsoptikgruppen für die Objektbeleuchtung alternierend in einer Kreisbahn um eine Empfangsoptik angeordnet. Durch Verdrehen der Objektivbeleuchtung kann unter diesen Strahlformungsoptikgruppen die für eine jeweils eingesetzte Empfangsoptik passende ausgewählt werden, indem sie in Deckung mit den Lichtquellen gebracht wird. Nachteilig an dieser Anordnung ist, dass verschiedene Strahlformungsoptikgruppen vorzusehen sind, obwohl jeweils nur eine zum Einsatz kommt, und dass nur so viele Beleuchtungsszenarien unterstützt werden, wie Strahlformungsoptikgruppen vorhanden sind. Gerade bei einer dichten Besetzung der Kreisbahn mit Lichtquellen bedeutet das Vorsehen verschiedener Strahlformungsoptikgruppen nicht nur höheren Aufwand, sondern ist wegen des verfügbaren Raumes überhaupt nur sehr begrenzt möglich.

Die US 2005/0231948 A1 offenbart eine Beleuchtungsvorrichtung mit anpassbaren Linsen oder Filtern. In einer Ausführungsform ist ein Ring von Lampenbereichen vorgesehen, durch dessen Zentrum ein Kameraobjektiv geführt werden kann. Den Lampenbereichen ist eine transparente Abdeckung zugeordnet, welche Linseneigenschaften aufweist. Die Abdeckung kann über ein Gewinde gegenüber den Lampenbereichen verdreht werden, wodurch der gegenseitige Abstand verändert wird. Deshalb können über die Anzahl der Umdrehungen in dem Gewinde unterschiedliche Linseneffekte eingestellt werden.

Es ist daher Aufgabe der Erfindung, eine einfache Beleuchtung anzugeben, die auf einen Erfassungsbereich einstellbar ist.

Diese Aufgabe wird durch eine Beleuchtungsvorrichtung für einen kamerabasierten Codeleser und ein Verfahren zum auf einen Arbeitsabstand angepassten Ausleuchten eines Erfassungsbereiches nach Anspruch 1 beziehungsweise 12 gelöst. Dabei geht die Erfindung von dem Grundgedanken aus, Sendeoptiken einer Vielzahl von mindestens zwei ringförmig angeordneten Lichtsendern mit einem beweglichen und durch seine Bewegung austauschbaren Anteil auszustatten. Dieser Austausch vollzieht sich, indem durch Drehbewegung eines Gehäuseaufsatzes der bewegliche Anteil der Sendeoptik einem anderen Lichtsender zugeordnet wird. Die Drehbewegung sorgt dabei gleichzeitig für eine Abstandsänderung des Gehäuseaufsatzes gegenüber einem Gehäusegrundteil, in dem sich die Lichtsender befinden. Das führt effektiv zu einer Abstandsänderung in den Sendeoptiken und somit einer Verstellung der Beleuchtung auf einen anderen Arbeitsabstand beziehungsweise einer Änderung des Beleuchtungsfeldes.

Die Erfindung hat den Vorteil, dass bei sehr einfachem und damit kostengünstigem Aufbau die Beleuchtung auf unterschiedliche Abstände und Beleuchtungsszenarien einstellbar ist. Dazu muss lediglich der Gehäuseaufsatz in die passende Lage verdreht werden. Die optischen Elemente selbst können dabei ganz einfache Linsen sein. Dennoch wird eine gute Anpassbarkeit an verschiedene Anwendungen erreicht. Das Beleuchtungsfeld kann gut entsprechend dem Sichtfeld der Kamera abgegrenzt und gleichmäßig ausgeleuchtet werden. Auch in größeren Abständen wird eine hohe Beleuchtungsstärke erzielt.

Den Lichtsendern ist bevorzugt jeweils eine zu den Lichtsendern lagefeste Sendelinse zugeordnet. Die Sendeoptiken umfassen somit jeweils die fixe, lagefeste Sendelinse, deren Zuordnung zu einem Lichtsender unabhängig von der Drehstellung des Gehäuseaufsatzes ist, und die bewegliche, mit Drehbewegung ausgetauschte Aufsatzlinse. Durch die zusätzlichen Sendelinsen können leistungsstärkere Sendeoptiken mit geringeren Abbildungsfehlern aufgebaut werden.

Die Aufsatzlinsen untereinander und/oder die Sendelinsen untereinander sind bevorzugt gleichartig ausgebildet. Sie haben also untereinander die identischen optischen Parameter, wie Brennweite, Krümmung, Material und sind damit optisch gleichwertig. Beispielsweise werden die Linsen dazu mit demselben Prozess gefertigt oder von demselben Master abgeformt. Dadurch wird die Herstellung der Beleuchtung besonders kostengünstig. Außerdem sind die Sendeoptiken unabhängig von der konkreten Drehstellung des Gehäuseaufsatzes und damit der Zuordnung zwischen Aufsatzlinsen und Sendelinsen untereinander optisch gleichwertig.

Die Lichtsender, die Aufsatzlinsen und/oder die Sendelinsen sind bevorzugt in Umfangsrichtung gleichmäßig verteilt angeordnet. Mit einer gleichmäßigen Anordnung der Lichtsender sind wegen deren lagefester Zuordnung automatisch auch die Sendelinsen gleichmäßig angeordnet. Die Aufsatzlinsen bilden zunächst eine von den Lichtsendern unabhängige Gruppe, auch wenn sie in Anordnung und Anzahl vorteilhaft an die Lichtsender angepasst werden können. Durch die gleichmäßige Anordnung entsteht eine rotationssymmetrische, besonders homogene Beleuchtung.

Die Vielzahl Lichtsender, Aufsatzlinsen und Sendelinsen ist bevorzugt jeweils die gleiche. Erneut ist das für die Lichtsender und Sendelinsen schon durch die lagefeste Zuordnung bedingt. Die Aufsatzlinsen können aber prinzipiell sowohl in Anordnung als auch Anzahl davon abweichen. Dann wird durch die Verdrehung des Gehäuseaufsatzes eine Auswahl von Aufsatzlinsen getroffen, die in der jeweiligen Drehstellung mit einer Sendelinse eine Sendeoptik bilden. Wählt man aber eine gleiche Anzahl von Aufsatzlinsen, insbesondere in identischer gleichmäßiger Anordnung wie die Sendelinsen, dann verschiebt eine geeignete Drehbewegung des Gehäuseaufsatzes die Aufsatzlinse jeweils eine Position weiter auf die benachbarte Sendelinse, so dass die vorhandenen Linsen optimal genutzt werden.

Das Gewinde ist bevorzugt gerastet ausgebildet, so dass Gehäusegrundteil und Gehäuseaufsatz in bestimmten Verstellwinkeln zueinander einrasten. Diese Verstellwinkel entsprechen vorteilhaft gerade den Drehpositionen, in denen zweite Aufsatzlinsen und Sendelinsen zur Deckung kommen. Durch die Rastung muss keine Feinpositionierung vorgenommen werden, da die genaue Drehposition automatisch eingenommen und gehalten wird.

Die Rastpunkte sind voneinander bevorzugt in dem Winkelabstand der Aufsatzlinsen oder einem Vielfachen davon beabstandet. Damit wird eine kleinste Rastung vorgegeben, die der feinsten sinnvollen Verstellung entspricht, bei der zu einer gegebenen Sendelinse die zunächst zugeordnete Aufsatzlinse durch deren benachbarte Aufsatzlinse ausgetauscht wird. Wie stark sich die Sendeoptiken bei Verdrehen um eine Rastung verstellen, hängt von der Gewindesteigung und der dadurch bedingten Abstandsänderung zwischen den Aufsatzlinsen und den Sendelinsen ab.

Der Gehäuseaufsatz weist bevorzugt eine Frontscheibe der Beleuchtungsvorrichtung und/oder des kamerabasierten Codelesers auf. Damit wird die Beleuchtungsvorrichtung beziehungsweise der Codeleser vor äußeren Einflüssen geschützt.

Die Aufsatzlinsen sind bevorzugt in die Frontscheibe integriert. Dadurch können die Aufsatzlinsen besonders kostengünstig hergestellt werden. Es muss lediglich ein besonderes Formteil für die Frontscheibe verwendet werden. Die Aufsatzlinsen sind dann praktisch ohne Mehraufwand durch die Doppelfunktion der Frontscheibe in die Beleuchtung integriert.

Der Gehäuseaufsatz weist bevorzugt eine Grifffläche für manuelle Verdrehung auf oder ist mit einen Antrieb für eine motorische Verdrehung verbunden. Damit kann die für eine Verstellung der Beleuchtung erforderliche Drehbewegung des Gehäuseaufsatzes erfolgen.

In bevorzugter Weiterbildung der Erfindung umfasst ein kamerabasierter Codeleser eine erfindungsgemäße Beleuchtungsvorrichtung und weist zudem einen Bildsensor und eine Auswertungseinheit auf, die dafür ausgebildet ist, aus Bilddaten des Bildsensors eine Codeinformation eines aufgenommenen Codes auszulesen und auszugeben. Selbst unter ungünstigen Umgebungsbedingungen sind so die Codes gleichmäßig und ausreichend ausgeleuchtet und können daher mit besonders geringen Lesefehlern erfasst werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Schnittdarstellung durch einen kamerabasierten Codeleser mit erfindungsgemäßer Beleuchtungsvorrichtung;
- Fig. 2: eine Frontansicht der Beleuchtungsvorrichtung gemäß Figur 1;
- Fig.3a: eine skizzenhafte Darstellung der Intensitätsverteilung in den Beleuchtungsfeldern bei in die Ferne eingestellter Beleuchtungsvorrichtung; und
- Fig. 3b: eine skizzenhafte Darstellung gemäß Figur 3a bei in die Nähe eingestellter Beleuchtungsvorrichtung.

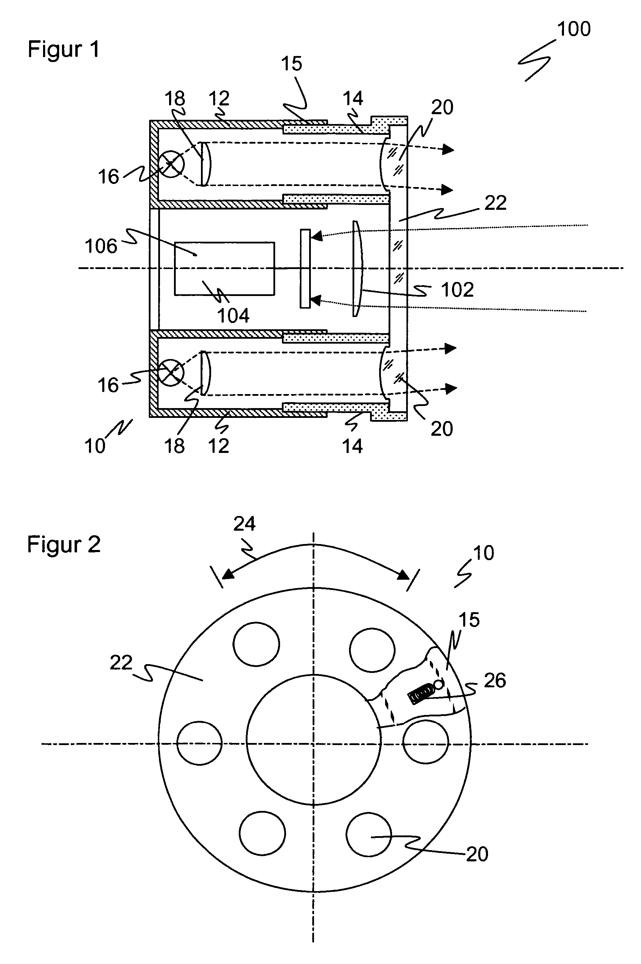

Figur 1 zeigt eine Schnittdarstellung eines kamerabasierten Codelesers 100. Eine ringförmige Beleuchtungsvorrichtung 10 des Codelesers 100 ist in einer Frontalansicht in Figur 2 erneut dargestellt. Gleiche Bezugszeichen bezeichnen in allen Figuren die gleichen Merkmale. Die Erfindung wird an dem Beispiel eines kamerabasierten Codelesers 100 beschrieben. Die erfindungsgemäße Beleuchtungsvorrichtung 10 kann aber ebenso für andere Kameras mit eigener Beleuchtung eingesetzt werden.

Der Codeleser 100 weist eine Empfangsoptik 102 auf, um einen nicht dargestellten Code scharf auf einem Bildsensor 104 abzubilden. Bilddaten des Codes werden dann einer Auswertungseinheit 106 zugeleitet, welche die Codeinformation ausliest. Der Aufbau des Empfangspfad des Codelesers 100 ist an sich bekannt, und deshalb sind auch nur dessen wichtigste Elemente gezeigt. Abweichend von der Darstellung kann der Mittenbereich des Codelesers 100, in dem sich Bildsensor 104 und Auswertungseinheit 106 befinden, auch insgesamt von einem Empfangsobjektiv beansprucht werden, und die weiteren Elemente des Empfangspfades sind diesem Empfangsobjektiv nachgeordnet, also links der Darstellung in Figur 1.

Die Beleuchtungsvorrichtung 10 weist ein Gehäusegrundteil 12 und einen Gehäuseaufsatz 14 auf, die über ein Gewinde 15 in Gewindeeingriff miteinander stehen. Der Gehäuseaufsatz 14 ist demnach gegenüber dem Gehäusegrundteil 12 verdrehbar, und der Abstand zwischen Gehäusegrundteil 12 und Gehäuseaufsatz 14 ändert sich abhängig von dem Drehwinkel und der Gewindesteigung. Dabei sind unter dem Begriff Gewinde jegliche mechanischen Verbindungen zu verstehen, die eine Abstandsänderung bei Drehbewegung bewirken.

In dem Gehäusegrundteil 12 sind eine Vielzahl von beispielsweise zwei bis zehn oder noch mehr Lichtsendern 16 ringförmig angeordnet. Als Lichtquellen der Lichtsender 16 dienen beispielsweise LEDs. Den Lichtsendern 16 ist jeweils lagefest eine Sendelinse 18 zugeordnet.

Der Gehäuseaufsatz 14 weist eine Vielzahl von Aufsatzlinsen 20 auf. In der in Figur 1 gezeigten Ausführungsform sind diese Aufsatzlinsen 20 in eine Frontscheibe 22 des Codelesers 100 integriert. Alternative Ausführungsformen sehen separate Aufsatzlinsen 20 vor, die beispielsweise von einer Frontscheibe 22 geschützt in dem Gehäuseaufsatz 14 untergebracht sind.

Jeweils ein Paar aus einer Sendelinse 18 und einer Aufsatzlinse 20 bildet eine Sendeoptik für einen Lichtsender 16. In einer besonders einfachen Ausführungsform kann auf die Sendelinsen 18 verzichtet werden. Umgekehrt können auch kompliziertere Sendeoptiken mit weiteren Linsen oder sonstigen zusätzlichen optischen Elementen vorgesehen sein.

Bei einer Drehbewegung des Gehäuseaufsatzes 14 gegenüber dem Gehäusegrundteil 12 wird die Zuordnung zwischen den Lichtsendern 16 mit ihren Sendelinsen 18 einerseits und den Aufsatzlinsen 20 andererseits verändert. Wie am besten in Figur 2 zu erkennen, rückt bei einem Verstellwinkel 24, der dem Winkelabstand zweier Aufsatzlinsen 20 entspricht, jeweils eine benachbarte Aufsatzlinse 20 nach. Die Sendeoptik zu einem Lichtsender 16 wird somit nach einer entsprechenden Drehbewegung des Gehäuseaufsatzes 14 von einem anderen Paar aus der lagefesten Sendelinse 18 und der neu vor den Lichtsender 16 gerückten Aufsatzlinse 20 gebildet. Da sich bei der Drehung in dem Gewinde 15 der Abstand zwischen Gehäuseaufsatz 14 und Gehäusegrundteil 12 verändert, führt dies auch zu einem veränderten Abstand zwischen Sendelinse 18 und Aufsatzlinse 20 und somit veränderten optischen Eigenschaften der Sendeoptik. Durch fortgesetzte Drehbewegung werden die Zuordnungen der Aufsatzlinsen 20 zu den Sendelinsen 18 weiter verändert, um größere Abstandsänderungen zu erreichen. Die Aufsatzlinsen 20 bilden so variable optische Elemente, mit deren Hilfe die Beleuchtungsvorrichtung 10 auf einen gewünschten Abstand fokussiert und/oder eine Änderung des Beleuchtungsfeldes bewirkt wird.

Bei freier Drehbewegung des Gehäuseaufsatzes 14 müsste die Winkeleinstellung jeweils sehr genau gewählt und fixiert werden, um die Aufsatzlinse 20 gegenüber der Sendelinse 18 in die richtige Anordnung zu bringen und dort festzuhalten. Deshalb ist das Gewinde 15 zwischen dem Gehäusegrundteil 12 und dem Gehäuseaufsatz 14 vorzugsweise mit einer Rastung versehen. In Figur 2 ist die Frontscheibe 22 an einer Stelle aufgebrochen dargestellt, um einen federgelagerten Kugelzylinderstift 26 mit einer entsprechenden gegenüberliegenden Öffnung als Umsetzungsbeispiel einer Rastung zu illustrieren. Der Gehäuseaufsatz 14 rastet somit in den durch die Öffnungen vorgegebenen Positionen, die so verteilt sind, dass dort jeweils eine Aufsatzlinse 20 in der gewünschten Position zu dem Lichtsender 16 beziehungsweise dessen lagefest zugeordneter Sendelinse 18 steht. Dazu sind die Rastpunkte beispielsweise in dem Verstellwinkel 24 beabstandet, der zwischen zwei Aufsatzlinsen 20 liegt.

Figur 2 zeigt die Aufsatzlinsen 20 in einer bevorzugten gleichmäßigen Verteilung über den Umfang bei gleichem radialen Abstand. Denkbar sind auch unterschiedliche radiale Abstände, beispielsweise um mehrere gegeneinander versetzte Ringe zu bilden. Die Lichtsender 16 und mit ihnen die lagefest hierzu angeordneten Sendelinsen 18 sind in analoger Weise zu einem oder mehreren Ringen angeordnet. Dabei muss aber die Anzahl der Lichtsender 16 mit ihren Sendelinsen 18 einerseits und die Anzahl der Aufsatzlinsen 20 andererseits nicht unbedingt gleich sein. Beispielsweise können vier Lichtsendern 16 auch sechs, acht oder noch mehr Aufsatzlinsen 20 gegenüberstehen. In jeder Drehstellung ist dann ein Teil der Aufsatzlinsen 20 inaktiv. Dafür genügen kleinere Winkelschritte als der Winkelabstand zweier Lichtsender 16, um neue Sendeoptiken zu bilden. Im Extremfall kann man sich auch lediglich einen Lichtsender 16 mit nur einer Aufsatzlinse 20 vorstellen, die dann nach jeweils einer vollen Umdrehung des Gehäuseaufsatzes mit einem neuen Abstand erneut vor dem Lichtsender 16 steht. Große Lichtstärken und eine einfache Verstellmöglichkeit erreicht man aber mit einer Vielzahl von Lichtsendern 16 und einer mindestens ebenso großen Vielzahl von Aufsatzlinsen 20. Die Einstellcharakteristik ist außer über die Anzahl der Aufsatzlinsen 20 und die Rastpunkte auch über die Gewindesteigung des Gewindes 15 beeinflussbar, welche die Abstandsänderung der Aufsatzlinse 20 bei gegebenem Verstellwinkel festlegt.

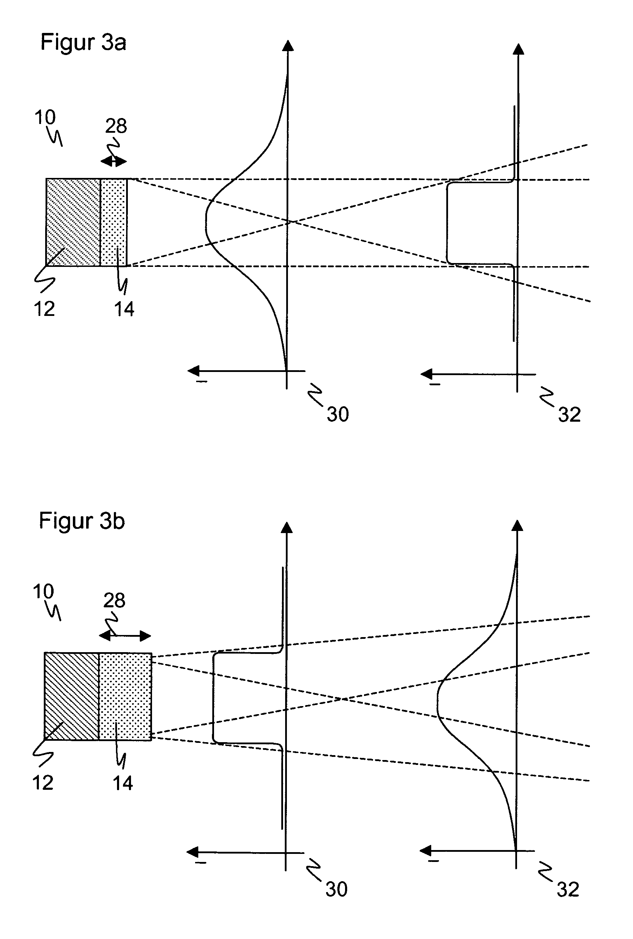

Figur 3 zeigt skizzenhaft das durch die Beleuchtungsvorrichtung 10 erzeugte Beleuchtungsfeld. Dabei ist in Figur 3a die Beleuchtungsvorrichtung 10 für ein fernes Beleuchtungsfeld eingestellt, indem der Gehäuseaufsatz 14 weit eingeschraubt ist. Dadurch ist der Abstand des Gehäuseaufsatzes 14 zu dem Gehäusegrundteil 12 und damit auch der Abstand zwischen den Aufsatzlinsen 20 und den Sendelinsen 18 besonders klein, wie dies durch einen Pfeil 28 angedeutet ist. In Figur 3b dagegen ist die Beleuchtungsvorrichtung 10 für ein nahes Beleuchtungsfeld eingestellt, indem der Gehäuseaufsatz 14 weit herausgeschraubt ist. Dadurch wird der Abstand des Gehäuseaufsatzes 14 zu dem Gehäusegrundteil 12 und damit auch der Abstand zwischen den Aufsatzlinsen 20 und den Sendelinsen 18 besonders groß.

Mit Bezugszeichen 30 und 32 sind jeweils schematische Intensitätsverläufe in einem Schnitt im Nahbereich beziehungsweise im Fernbereich eingezeichnet. Wenn wie in Figur 3a die Beleuchtungsvorrichtung 10 auf ein fernes Beleuchtungsfeld eingestellt ist, bildet sich im Nahbereich ein eher verschmierter Intensitätsverlauf 30, im Fernbereich dagegen ein homogener und relativ scharf begrenzter Intensitätsverlauf 32 aus. Ist umgekehrt wie in Figur 3b die Beleuchtungsvorrichtung 10 auf ein nahes Beleuchtungsfeld eingestellt, so bildet sich im Nahbereich ein homogener und relativ scharf begrenzter Intensitätsverlauf 30 und im Fernbereich ein mit zunehmendem Abstand diffuserer und inhomogenerer Intensitätsverlauf 32 aus. Somit kann durch manuelles oder motorisches Verdrehen des Gehäuseaufsatzes 14 die Beleuchtungsvorrichtung 10 auf den gewünschten Arbeitsabstand und ein gewünschtes Beleuchtungsfeld eingestellt werden.

## Patentansprüche

1. Beleuchtungsvorrichtung (10) für einen kamerabasierten Codeleser (100) mit einer Vielzahl von ringförmig und lagefest zu einem Gehäusegrundteil (12) angeordneten Lichtsendern (16) und mit einer Vielzahl von den Lichtsendern (16) zugeordneten Sendeoptiken (20) in einem gegenüber dem Gehäusegrundteil (12) drehbeweglich gelagerten Gehäuseaufsatz (14), wobei die Sendeoptiken (20) durch Drehung des Gehäuseaufsatzes (14) für eine auf einen Arbeitsabstand fokussierte Beleuchtung oder eine Änderung des Beleuchtungsfeldes einstellbar sind, wobei der Gehäuseaufsatz (14) eine Vielzahl von Aufsatzlinsen (20) aufweist,
**dadurch gekennzeichnet,**
**dass** der Gehäuseaufsatz (14) gegenüber dem Gehäusegrundteil (12) in einem Gewinde (15) gelagert ist, so dass durch Drehbewegung des Gehäuseaufsatzes (14) den Lichtsendern (16) Aufsatzlinsen (20) in veränderbarem Abstand zuordenbar sind.

2. Beleuchtungsvorrichtung (10) nach Anspruch 1,
wobei den Lichtsendern (16) jeweils eine zu den Lichtsendern (16) lagefeste Sendelinse (18) zugeordnet ist.

3. Beleuchtungsvorrichtung (10) nach Anspruch 1 oder 2,
wobei die Aufsatzlinsen (20) untereinander und/oder die Sendelinsen (18) untereinander gleichartig ausgebildet sind.

4. Beleuchtungsvorrichtung (10) nach einem der vorhergehenden Ansprüche, wobei die Lichtsender (16), die Aufsatzlinsen (20) und/oder die Sendelinsen (18) in Umfangsrichtung gleichmäßig verteilt angeordnet sind.

5. Beleuchtungsvorrichtung (10) nach einem der vorhergehenden Ansprüche, wobei die Vielzahl Lichtsender (16), Aufsatzlinsen (20) und Sendelinsen (18) jeweils die gleiche ist.

6. Beleuchtungsvorrichtung (10) nach einem der vorhergehenden Ansprüche, wobei das Gewinde (15) gerastet ausgebildet ist, so dass Gehäusegrundteil (12) und Gehäuseaufsatz (14) in bestimmten Verstellwinkeln zueinander einrasten.

7. Beleuchtungsvorrichtung (10) nach Anspruch 6,
wobei die Rastpunkte (26) voneinander in dem Winkelabstand (24) der Aufsatzlinsen (20) oder einem Vielfachen davon beabstandet sind.

8. Beleuchtungsvorrichtung (10) nach einem der vorhergehenden Ansprüche, wobei der Gehäuseaufsatz (14) eine Frontscheibe (22) der Beleuchtungsvorrichtung (10) und/oder des kamerabasierten Codelesers (100) aufweist.

9. Beleuchtungsvorrichtung (10) nach Anspruch 8,
wobei die Aufsatzlinsen (20) in die Frontscheibe (22) integriert sind.

10. Beleuchtungsvorrichtung (10) nach einem der vorhergehenden Ansprüche, wobei der Gehäuseaufsatz (14) eine Grifffläche für manuelle Verdrehung aufweist oder mit einen Antrieb für eine motorische Verdrehung verbunden ist.

11. Kamerabasierter Codeleser (100) mit einer Beleuchtungsvorrichtung (10) nach einem der vorhergehenden Ansprüche, der einen Bildsensor (104) und eine Auswertungseinheit (106) aufweist, die dafür ausgebildet ist, aus Bilddaten des Bildsensors (104) eine Codeinformation eines aufgenommenen Codes auszulesen und auszugeben.

12. Verfahren zum auf einen Arbeitsabstand angepassten Ausleuchten eines Erfassungsbereichs, insbesondere des Erfassungsbereichs eines kamerabasierten Codelesers (100), wobei der Erfassungsbereich von einer Vielzahl ringförmig und lagefest zu einem Gehäusegrundteil (12) angeordneter Lichtsender (16) ausgeleuchtet wird und die Abstrahlcharakteristiken der Lichtsender (16) durch zugeordnete Sendeoptiken (20) an den Arbeitsabstand angepasst werden, indem die Sendeoptiken (20) durch Verdrehen eines Gehäuseaufsatzes (14) gegenüber dem Gehäusegrundteil (12) eingestellt werden,
**dadurch gekennzeichnet,**
**dass** durch die Drehung des Gehäuseaufsatzes (14) mittels eines Gewindes (15) der Abstand zwischen dem Gehäusegrundteil (12) und dem Gehäuseaufsatz (14) und damit zugleich ein Abstand zwischen einem jeweiligen Lichtsender (16) und einer in dem Gehäuseaufsatz (14) angeordneten Aufsatzlinse (20) verstellt wird.

13. Verfahren nach Anspruch 12,
wobei das Gewinde (15) in Verstellwinkeln einrastet, die dem Winkelabstand (24) der Aufsatzlinsen (20) untereinander oder einem Vielfachen davon entsprechen, und wobei die Sendeoptik (20) verstellt wird, indem der Gehäuseaufsatz in eine andere Rastung (26) verdreht und sich somit der Abstand von dem Lichtsender (16) zu der neu zugeordneten Aufsatzlinse (20) gegenüber der zuvor zugeordneten Aufsatzlinse (20) verändert.

14. Verfahren nach Anspruch 12 oder 13,
wobei den Lichtsendern (16) jeweils eine lagefeste Sendelinse (18) zugeordnet ist und wobei die von jeweils einer Sendelinse (18) und einer Aufsatzlinse (20) gebildeten Sendeoptiken (18, 20) verstellt werden, indem durch Drehbewegung des Gehäuseaufsatzes (14) den Sendelinsen (18) jeweils eine andere Aufsatzlinse (20) in einem anderen Abstand zugeordnet wird.

## Claims

1. An illumination apparatus (10) for a camera-based code reader (100) having a plurality of light transmitters (16) arranged in a ring and in a fixed position with respect to a base housing part (12) and a plurality of transmission optics (20) associated with the light transmitters (16) in a front housing (14) which is supported for rotational movement with respect to the base housing part (12), wherein the transmission optics (20) can be set for an illumination focused on a working distance or for a change of the illumination field by rotation of the front housing (14), wherein the front housing (14) comprises a plurality of front lenses (20),
**characterized in that**
the front housing (14) is supported with respect to the base housing part (12) in a thread (15) so that by a rotational movement of the front housing (14) front lenses (20) can be associated with the light transmitters (16) at a changed spacing.

2. An illumination apparatus (10) in accordance with claim 1,
wherein a respective transmission lens (18) is associated with each of the light transmitters (16) in a fixed position with respect to the light transmitters (16).

3. An illumination apparatus (10) in accordance with claim 1 or 2,
wherein the front lenses (20) among themselves and/or the transmission lenses (18) among themselves are all of the same type.

4. An illumination apparatus (10) in accordance with one of the preceding claims,
wherein the light transmitters (16), the front lenses (20) and/or the transmission lenses (18) are arranged uniformly distributed in a peripheral direction.

5. An illumination apparatus (10) in accordance with one of the preceding claims,
wherein the number of light transmitters (16), the number of front lenses (20), and the number of transmission lenses (18) is the same.

6. An illumination apparatus (10) in accordance with one of the preceding claims,
wherein the thread (15) is formed with detents so that the base housing part (12) and the front housing (14) latch at specific adjustment angles to one another.

7. An illumination apparatus (10) in accordance with claim 6,
wherein the detents (26) are spaced apart from one another at the angular spacing (24) of the front lenses (20) or at a multiple thereof.

8. An illumination apparatus (10) in accordance with one of the preceding claims,
wherein the front housing (14) has a front screen (22) for the illumination apparatus (10) and/or the camera-based code reader (100).

9. An illumination apparatus (10) in accordance with claim 8,
wherein the front lenses (20) are integrated into the front screen (22).

10. An illumination apparatus (10) in accordance with one of the preceding claims,
wherein the front housing (14) has a grip surface for manual rotation or is connected to a drive for a powered rotation.

11. A camera-based code reader (100) having an illumination apparatus (10) according to one of the preceding claims which includes an image sensor (104) and an evaluation unit (106) configured to read out and output code information of an imaged code from image data of the image sensor (104).

12. A method for the illumination of a detection zone matched to a working distance, in particular the detection zone of a camera-based code reader (100), wherein the detection zone is illuminated by a plurality of light transmitters (16) arranged in a ring and in a fixed position with respect to a base housing part (12) and the radiation characteristics of the light transmitters (16) are matched to the working distance by associated transmission optics (20) by setting the transmission optics (20) by rotation of a front housing (14) with respect to the base housing part (12),
**characterized in that**
by the rotation of the front housing (14) by means of a thread (15) the spacing between the base housing part (12) and the front housing (14) and thus at the same time a spacing between a respective light transmitter (16) and a front lens (20) arranged in the front housing (14) are adjusted.

13. A method in accordance with claim 12,
wherein the thread (15) latches at adjustment angles which correspond to the angular spacing (24) of the front lenses (20) or to a multiple thereof, and wherein the transmission optics (20) are adjusted by rotating the front housing into a different detent (26) thereby varying the spacing of the light transmitters (16) and the newly associated front lenses (20) with respect to the previously associated front lenses (20).

14. A method in accordance with claim 12 or 13,
wherein a fixed-position transmission lens (18) is associated with each of the light transmitters (16), and wherein the transmission optics (18, 20) each formed by a transmission lens (18) and a front lens (20) are adjusted in that respective different front lenses (20) are associated at a different distance from the transmission lenses (18) by a rotational movement of the front housing (14).

## Revendications

1. Dispositif d'éclairage (10) pour un lecteur de code (100) basé sur un appareil d'imagerie, comprenant une pluralité d'émetteurs de lumière (16) agencés sous forme de cercle et stationnaires par rapport à une partie de base de boîtier (12), et comprenant une pluralité d'optiques d'émission (20) associées aux émetteurs de lumière (16) dans une coiffe de boîtier (14) montée mobile en rotation par rapport à la partie de base de boîtier (12), dans lequel les optiques d'émission (20) sont réglables par rotation de la coiffe de boîtier (14) pour un éclairage focalisé à une distance de travail ou pour une variation du champ d'éclairage, et la coiffe de boîtier (14) comprend une pluralité de lentilles de coiffe (20), **caractérisé en ce que** la coiffe de boîtier (14) est monté par rapport à la partie de base de boîtier (12) dans un pas de vis (15) de telle sorte que par un mouvement de rotation de la coiffe de boîtier (14), il est possible d'associer aux émetteurs de lumière (16) des lentilles de coiffe (20) à distance variable.

2. Dispositif d'éclairage (10) selon la revendication 1,
dans lequel une lentille d'émission (18) respective stationnaire par rapport aux émetteurs de lumière (16) est associée à chaque émetteur de lumière (16).

3. Dispositif d'éclairage (10) selon la revendication 1 ou 2,
dans lequel les lentilles de coiffe (20) sont réalisées de même type les unes par rapport aux autres et/ou les lentilles d'émission (18) sont réalisées de même type les unes par rapport aux autres.

4. Dispositif d'éclairage (10) selon l'une des revendications précédentes,
dans lequel les émetteurs de lumière (16), les lentilles de coiffe (20) et/ou les lentilles d'émission (18) sont agencé(e)s de manière régulièrement répartie en direction périphérique.

5. Dispositif d'éclairage (10) selon l'une des revendications précédentes,
dans lequel la pluralité d'émetteurs de lumière (16), la pluralité de lentilles de coiffe (20) et la pluralité de lentilles d'émission (18) sont respectivement les mêmes.

6. Dispositif d'éclairage (10) selon l'une des revendications précédentes,
dans lequel le pas de vis (15) est réalisé de manière crantée, de sorte que la partie de base de boîtier (12) et la coiffe de boîtier (14) s'enclenchent l'une par rapport à l'autre sous des angles de réglage déterminés.

7. Dispositif d'éclairage (10) selon la revendication 6,
dans lequel les points d'enclenchement (26) sont écartés les uns des autres à la distance angulaire (24) des lentilles de coiffe (20) ou à un multiple de cette distance.

8. Dispositif d'éclairage (10) selon l'une des revendications précédentes,
dans lequel la coiffe de boîtier (14) comprend une plaque frontale (22) du dispositif d'éclairage (10) et/ou du lecteur de code (100) basé sur un appareil d'imagerie.

9. Dispositif d'éclairage (10) selon la revendication 8,
dans lequel les lentilles de coiffe (20) sont intégrées dans la plaque frontale (22).

10. Dispositif d'éclairage (10) selon l'une des revendications précédentes,
dans lequel la coiffe de boîtier (14) comporte une surface d'agrippement pour une rotation manuelle, ou bien est reliée à un entraînement pour une rotation motorisée.

11. Lecteur de code (100) basé sur un appareil d'imagerie, comprenant un dispositif d'éclairage (10) selon l'une des revendications précédentes, qui comprend un capteur d'image (104) et une unité d'évaluation (106) qui est réalisée pour lire une information de code concernant un code pris en image à partir des données image du capteur d'image (104) et pour fournir cette information.

12. Procédé pour éclairer une zone de détection de manière adaptée à une distance de travail, en particulier la zone de détection d'un lecteur de code (100) basé sur un appareil d'imagerie, dans lequel la zone de détection est éclairée par une pluralité d'émetteurs de lumière (16) agencés sous forme de cercle et de manière stationnaire sur une partie de base de boîtier (12), et les caractéristiques de rayonnement des émetteurs de lumière (16) sont adaptées à la distance de travail au moyen d'optiques d'émission (20) associées, en ce que les optiques d'émission (20) sont réglées par rotation d'une coiffe de boîtier (14) par rapport à la partie de base (12) du boîtier,
**caractérisé en ce que** par la rotation de la coiffe de boîtier (14) au moyen d'un pas de vis (15), la distance entre la partie de base de boîtier (12) et la coiffe de boîtier (14) et ainsi simultanément une distance entre un émetteur de lumière respectif (16) et une lentille de coiffe (20) agencée dans la coiffe de boîtier (14) est réglée.

13. Procédé selon la revendication 12,
dans lequel le pas de vis (15) s'enclenche sous des angles de réglage qui correspondent à la distance angulaire (24) des lentilles de coiffe (20) les unes par rapport aux autres ou sous un multiple de cet angle, et dans lequel l'optique d'émission est réglée en tournant la coiffe de boîtier jusque dans un autre moyen d'enclenchement (26), et la distance de l'émetteur de lumière (16) jusqu'à la lentille de coiffe (20) nouvellement associée est modifiée par rapport à la lentille de coiffe (20) auparavant associée.

14. Procédé selon la revendication 12 ou 13,
dans lequel une lentille d'émission stationnaire (18) respective est associée à chaque émetteur de lumière (16), et les optiques d'émission (18, 20) formées respectivement par une lentille d'émission (18) et par une lentille de coiffe (20) sont réglées en ce que, par mouvement de rotation de la coiffe de boîtier (14), une autre lentille de coiffe (20) est respectivement associée aux lentilles d'émission (18) à une autre distance.
